Europäisches Patentamt

European Patent Office

Office européen des brevets

(19)

(11) Numéro de publication : **0 155 210**
**B1**

(12)

# FASCICULE DE BREVET EUROPÉEN

(45) Date de publication du fascicule du brevet :
**13.12.89**

(51) Int. Cl.⁴ : **B 60 C   5/10**

(21) Numéro de dépôt : **85400317.5**

(22) Date de dépôt : **21.02.85**

---

(54) **Chambres à air discontinues.**

---

(30) Priorité : **29.02.84 FR 8403112**

(43) Date de publication de la demande :
**18.09.85 Bulletin 85/38**

(45) Mention de la délivrance du brevet :
**13.12.89 Bulletin 89/50**

(84) Etats contractants désignés :
**DE GB IT NL**

(56) Documents cités :
**EP—A— 0 090 221**
**EP—A— 0 090 222**
**DE—A— 2 832 546**
**FR—A— 1 105 267**
**FR—A— 1 251 340**
**GB—A—   718 634**

(73) Titulaire : **HUTCHINSON**
**2 rue Balzac**
**F-75008 Paris (FR)**

(72) Inventeur : **Lalanne, Yves**
**18, Rue du Loing Lieu dit "Cepoy"**
**F-45120 Chalette (FR)**
Inventeur : **Lherbier, Lucien**
**2 Bis Rue de la Folie**
**F-45120 Chalette (FR)**

(74) Mandataire : **Ores, Irène et al**
**CABINET ORES 6, Avenue de Messine**
**F-75008 Paris (FR)**

## Description

La présente invention est relative à une chambre à air pour véhicules à roues, tels que bicyclettes, cyclomoteurs, vélomoteurs, motocyclettes, scooters, automobiles, etc... du type discontinu et constitué par un tube fermé à ses deux extrémités, selon le préambule de la revendication 1.

Les chambres à air du type susdit sont connues de longue date (voir par exemple le DE-A-2 832 546) et ont été créées dans le but de les monter dans un pneu et de les démonter de ce dernier sans devoir démonter au préalable la roue ou les roues des véhicules.

En ce qui concerne la mise en place de ces chambres discontinues, il a été proposé de placer leurs extrémités fermées bout à bout, ce qui donne les chambres discontinues à extrémités aboutées, ou en alternative de recouvrir lesdites extrémités en correspondance de leur zone terminale. Dans ce dernier cas, quelle que soit la géométrie proposée pour les extrémités des chambres à air discontinues de l'Art antérieur, le recouvrement des extrémités, lors du montage dans le pneu, se fait en superposant les extrémités selon un plan sensiblement tangent au pneu ou à la roue, en sorte que l'extrémité fermée supérieure de la chambre discontinue est séparée de la surface intérieure du pneu par son extrémité inférieure.

Cette disposition des extrémités se recouvrant mutuellement est loin d'être satisfaisante sur le plan pratique, notamment :

en ce qui concerne la chambre discontinue elle-même, celle-ci présente une forte détérioration au niveau de la zone de recouvrement, par usure abrasive due au mouvement relatif des deux extrémités, usure qui est accentuée par la charge qui, en raison de la superposition des extrémités, comprime ces dernières l'une contre l'autre et contre le sol à chaque tour, ce qui détermine l'éloignement et le rapprochement relatifs périodiques des extrémités, avec frottement des zones de recouvrement et usure prématurée de la chambre ; en fait, les essais effectués aux bancs montrent que la tenue des chambres de l'Art antérieur, notamment destinées aux cyclomoteurs, ne dépasse pas 200 à 300 km, les paramètres d'essai étant, avec une roue d'entraînement bardée de barettes rectangulaires, les suivants :

· vitesse égale à 52 km/h,
· pression de gonflage égale à 2 000 hPa,
· charge égale à 80 kg,

en sorte que le principe même de la chambre discontinue à extrémités fermées et superposées perd sa crédibilité et rend complètement illusoire l'avenir d'un tel produit avec des performances aussi médiocres ;

en ce qui concerne le pneu équipé d'une chambre discontinue du type susdit, celui-ci présente une déformation en correspondance de l'endroit où les deux extrémités de la chambre se superposent.

La présente invention a, en conséquence, pour but de pourvoir à une chambre à air du type discontinu et constitué par un tube dont les extrémités sont fermées et se recouvrent mutuellement, qui répond mieux aux nécessités de la pratique que les chambres visant au même but antérieurement connues, notamment en ce que :

l'usure de la chambre est beaucoup plus faible et donc sa tenue beaucoup plus longue,

aucune déformation n'apparaît dans le pneu équipé de la chambre discontinue selon l'invention, et

le montage de la chambre discontinue conforme à l'invention dans le pneu est facilité par rapport au montage des chambres discontinues de l'Art antérieur.

La présente invention a également pour but de pourvoir à un procédé de fabrication de la chambre discontinue selon l'invention qui répond mieux aux nécessités de la pratique que les procédés connus antérieurement, permettant de réduire sensiblement le coût de revient de ladite chambre.

La présente invention a pour objet une chambre à air, destinée à être enveloppée par un pneu et à être montée sur des véhicules à roues, du type discontinu et constitué par un tube dont les extrémités sont fermées et se recouvrent mutuellement et par une valve de gonflage, caractérisée en ce que les zones de recouvrement desdites extrémités de la chambre à air montée dans le pneu se recouvrent selon un plan sensiblement radial, à savoir qu'elles sont juxtaposées l'une contre l'autre sensiblement dans le plan du pneu qui contient la valve de gonflage.

Selon un mode de réalisation préféré de la chambre à air conforme à l'invention, la valve de gonflage est disposée, dans ledit tube à l'état développé et dégonflé, dans le plan et perpendiculairement à l'axe longitudinal de ce tube, l'orifice circulaire d'application de la valve sur le tube étant ménagé à cet effet par moitié dans la paroi supérieure dudit tube, lorsque celui-ci se trouve à l'état développé et dégonflé, et par moitié dans sa paroi inférieure, par une opération de perçage en demi-lune, sur un des bords et dans une position quelconque du tube constituant la chambre à air.

Selon un mode de réalisation avantageux de la chambre à air conforme à l'invention, ses extrémités fermées sont soudées et coupées en biais par rapport à l'axe longitudinal dudit tube.

L'invention sera mieux comprise à l'aide du complément de description qui va suivre, qui se réfère aux dessins annexés dans lesquels :

la figure 1 est la représentation de la chambre discontinue conforme à l'invention à l'état gonflé, ainsi qu'elle se présente après montage dans un pneu ;

les figures 2a et 2b sont la représentation de la chambre de la figure 1 à l'état développé et dégonflé montrant l'emplacement de la valve de gonflage et de l'orifice d'application de cette valve sur le tube constituant la chambre selon l'invention.

Il doit être bien entendu, toutefois, que ces dessins et les parties descriptives correspondantes, sont donnés uniquement à titre d'illustration de l'objet de l'invention, dont ils ne constituent en aucune manière une limitation.

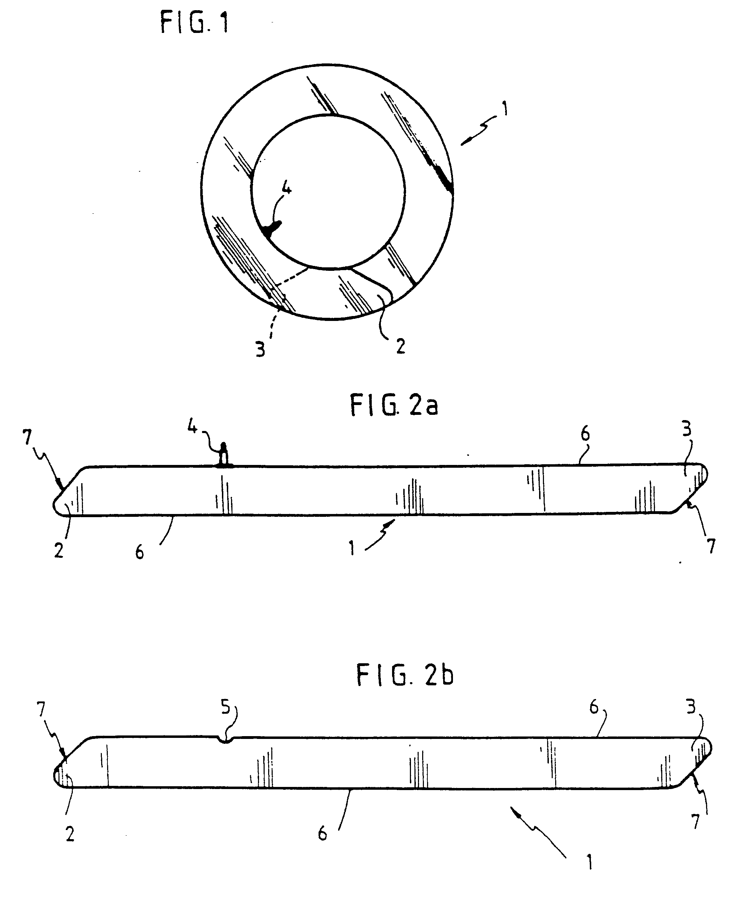

La chambre discontinue selon l'invention, qui est du type constitué par un tube 1, en caoutchouc ou en matière plastique thermosoudable, dont les extrémités fermées 2 et 3 se recouvrent mutuellement, se présente avec les deux zones de recouvrement appliquées l'une contre l'autre, selon un plan sensiblement radial (cf. la figure 1), lors du montage et du gonflage de la chambre dans un pneu (non représenté), à savoir que lesdites zones de recouvrement sont jointives sensiblement dans le plan qui contient la valve de gonflage 4.

L'avantage lié à cette nouvelle disposition relative des extrémités se recouvrant mutuellement 2 et 3, se comprend facilement lorsqu'on considère que, grâce à l'application desdites zones de recouvrement selon un plan sensiblement radial, l'effort que la charge exerce sur la chambre, notamment lorsque ses extrémités viennent au contact du sol, par l'intermédiaire du pneu, à chaque tour de la roue, agit pour déterminer un écartement axial des deux extrémités 2 et 3, qui s'oppose favorablement à leur frottement relatif, contrairement à ce qui arrive avec les chambres discontinues de l'Art antérieur dont le recouvrement se fait par superposition des extrémités fermées dans un plan sensiblement tangent au pneu, en sorte que la résistance à l'usure de la chambre discontinue selon l'invention est pratiquement équivalente à celle des chambres traditionnelles du type continu, à savoir constituées par un tube sans fin ou fermé sur lui-même.

Il va de soi que la disposition relative des zones de recouvrement des extrémités 2 et 3 du tube à air discontinu 1 dans un plan radial, lors du montage dans un pneu, peut se faire avec une chambre discontinue à extrémités superposées de l'Art antérieur, par rotation préalable de 90° de leurs extrémités, de façon à les porter dans un plan sensiblement radial.

Toutefois, cette position est instable car, sous l'effet du gonflage, les extrémités tendent à se superposer pour se porter dans un plan sensiblement tangent au pneu ou à la roue et donc perpendiculaire à la valve de gonflage qui, dans les chambres discontinues de l'Art antérieur, est également perpendiculaire au plan contenant le tube qui constitue la chambre à l'état développé et dégonflé.

Ladite torsion de 90° des extrémités fermées des chambres discontinues de l'Art antérieur pourrait être stabilisée en ménageant, dans les parois des extrémités du tube à air, des plis de la façon suivante :

en soudant les extrémités du tube à air de façon que les portions soudées sont contenues dans un plan perpendiculaire au plan contenant le tube à l'état développé et dégonflé, et

en appliquant un mouvement de torsion de 90° aux extrémités ainsi soudées, de façon à porter lesdites portions soudées dans le même plan du tube à air, suivi d'une compression stabilisant cette torsion, à l'état dégonflé, par la création de plis dans la paroi du tube. Lors du gonflage, les plis et la torsion de 90° sont annulés, en sorte que les extrémités du tube à air reprennent la position initiale, avec les portions soudées contenues dans un plan perpendiculaire au plan tangent à la roue : de cette manière les zones de recouvrement de la chambre montée dans le pneu sont stabilisées dans un plan radial, conformément à l'invention.

Toutefois, les opérations de soudage desdites extrémités dans un plan perpendiculaire au plan du tube à air à l'état développé et dégonflé, ainsi que les opérations de torsion et de pliage, sont coûteuses en main d'œuvre et en temps.

En fait, les procédés de fabrication par extrusion des chambres à air, discontinues ou non, comportent notamment les opérations suivantes :

extrusion du tube à air et talcage à l'intérieur du tube (le talcage étant nécessaire pour ne pas faire coller les parois du tube lors des opérations successives de plaquage, de pose de la valve de gonflage, de soudage des extrémités, notamment d'une chambre à air continue, ou encore lors du marquage) ;

plaquage, ou compression, du tube ainsi extrudé et talqué (ce qui entraîne la formation de plis permanents dans la paroi du tube tout au long de ses deux bords) ;

perçage de l'orifice d'application de la valve de gonflage (notamment obtenu par enlèvement de matière de la seule paroi supérieure du tube à air à l'état développé et dégonflé, ainsi plaqué, opération qui est donc très délicate pour ne pas percer la paroi inférieure), lequel orifice est centré par rapport à l'axe longitudinal du tube ;

pose de la valve de gonflage par collage par pression, en correspondance dudit orifice ;

talcage extérieur ;

soudure des extrémités dudit tube :

. par rapprochement et par compression des extrémités encore ouvertes du tube, après découpage à la longueur voulue, pour réaliser une chambre à air continue, ou

. par compression du tube à intervalles réguliers correspondant à la longueur voulue, (ou par apport de matière des extrémités encore ouvertes, après découpage à la longueur voulue), pour réaliser une chambre à air discontinue, dans chaque cas la compression étant effectuée perpendiculairement au plan de plaquage ;

vulcanisation en autoclave, et

découpage du tube, sortant en continu, dans l'axe des soudures et perpendiculairement à l'axe longitudinal du tube, pour des chambres à air discontinues, en sorte qu'il ne serait pas du tout pratique d'effectuer la compression des extrémités à souder dans un plan perpendiculaire au plan du tube à air à l'état développé et dégonflé, à savoir parallèlement au plan de plaquage et perpendiculairement à l'axe longitudinal du tube à air.

De plus, cette opération de soudure par compression des extrémités du tube, conjointement à la torsion et au pliage desdites extrémités dans le plan du tube, ne se prête pas non plus à être automatisée, ce qui ferait augmenter sensiblement le coût de fabrication.

En raison de ce qui précède, dans le cadre de la présente invention, on préfère stabiliser la disposition des zones de recouvrement des extrémités du tube à air monté dans un pneu, en disposant la valve de gonflage 4 dans le plan dudit tube 1 à l'état développé et dégonflé (le soudage des extrémités fermées étant réalisé toujours par compression et perpendiculairement au plan du tube développé, en sorte que les extrémités sont contenues dans ce plan) : cela équivaut à ménager l'orifice 5 d'application de la valve 4 en un point quelconque d'un des bords 6 du tube à air 1 par un perçage en demi-lune de façon à intéresser à la fois les parois supérieure et inférieure du tube plaqué 1, ce qui donne l'orifice circulaire complet voulu et simplifie considérablement le procédé même de fabrication.

De cette manière, lors du montage de la chambre à air selon l'invention dans un pneu, le centrage de la valve de gonflage 4 par rapport à la jante (non représentée) opère automatiquement la rotation de 90° nécessaire pour que les zones de recouvrement et les parties soudées des extrémités 2 et 3 du tube à air 1 se trouvent dans un plan radial, conformément à l'invention.

En fait, si la valve de gonflage 4 est contenue dans le même plan dudit tube 1 à l'état développé et dégonflé et est perpendiculaire à l'axe longitudinal de ce tube, il va de soi qu'une rotation de 90°, à partir de cette position, de la valve de gonflage 4 pour la centrer par rapport à la jante, fait subir la même rotation à l'ensemble du tube 1, et donc à ses extrémités, qui viennent se trouver ainsi dans un plan perpendiculaire au plan correspondant à l'état développé et dégonflé, à savoir dans un plan perpendiculaire au plan tangent au pneu ou à la roue, c'est-à-dire dans un plan sensiblement radial.

En ce qui concerne la fabrication de la chambre à air conforme à la présente invention, on préfère utiliser le procédé, connu des techniciens en la matière, selon lequel la vulcanisation est effectuée dans un bain de sels porté à une température appropriée, à la sortie de l'extrudeuse.

On modifie ce procédé en ce que, au lieu d'effectuer la vulcanisation immédiatement après la sortie de l'extrudeuse, on préfère vulcaniser le tube après le soudage de ce dernier effectué à intervalles réguliers, correspondant à la longueur voulue pour le tube à air 1, immédiatement à la sortie de l'extrudeuse.

En outre, on simplifie l'opération de perçage de l'orifice d'application de la valve de gonflage dans le sens indiqué plus haut.

En ce qui concerne le découpage des soudures dans le cadre de la présente invention, celui-ci est avantageusement fait en biais (cf. la référence 7 dans les figures 2a et 2b) par rapport à l'axe longitudinal du tube à air : de cette façon on réduit l'espace vide correspondant aux deux gradins formés lors du gonflage de la chambre, par les extrémités se recouvrant mutuellement.

Bien que les figures 2a et 2b représentent le tube à air 1 à l'état développé avec les extrémités 2 et 3 coupées en biais suivant un angle à pente positive par rapport à l'axe longitudinal du tube 1 (ainsi que représenté auxdites figures 2a et 2b), il est également possible, et dans certains cas préférable de découper lesdites extrémités 2 et 3 suivant un angle à pente négative par rapport audit axe (de même qu'il est possible de découper une extrémité suivant un angle à pente positive et l'autre extrémité suivant un angle à pente négative).

Cette réduction de l'espace vide formé par chaque gradin est importante parce que, lors du gonflage, les extrémités du tube 1 tendent à remplir cet espace vide présent à l'intérieur du pneu, et ceci aux dépens d'une dilatation de la paroi au niveau des extrémités 2 et 3, laquelle dilatation, limitée et non dangereuse dans le cas des chambres destinées aux vélomoteurs en raison de l'épaisseur relativement faible des pneus correspondants, devient par contre anormale dans le cas des chambres destinées aux cyclomoteurs ou analogues, ce qui augmente le risque d'usure et diminue la durée de vie des chambres à air.

Les essais de tenue effectués aux bancs avec la chambre discontinue conforme à la présente invention, notamment avec des chambres destinées aux cyclomoteurs, dans les mêmes conditions (à savoir avec les mêmes paramètres d'essais) que celles correspondant aux essais des chambres de l'Art antérieur décrits plus haut, ont montré que la tenue de la chambre selon l'invention est garantie sur 1500 à 3000 km et plus, valeurs remarquablement supérieures à celles comprises entre 200 et 300 km établies avec les chambres discontinues actuelles.

Au sujet des « kilomètres » pendant lesquels la tenue des chambres à air est assurée, il est à noter qu'il ne s'agit pas de kilomètres comparables à ceux correspondant au roulement dans les conditions normales d'utilisation ; toutefois, la comparaison entre lesdites valeurs obtenues avec une chambre conforme à la présente invention et les valeurs indiquées pour les chambres de l'Art antérieur, montre que la solution proposée par la présente invention — qui consiste essentiellement à modifier la disposition relative dans le pneu, ainsi que la géométrie, des extrémités fermées se recouvrant mutuellement — rend finalement crédible le principe de la chambre discontinue et permet de croire à un avenir certain de ce type de chambre.

**Revendications**

1. Chambre à air, destinée à être enveloppée par un pneu et à être montée sur des véhicules à roues, du type discontinu et constitué par un tube (1) dont les extrémités (2, 3) sont fermées et se recouvrent mutuellement et par une valve de gonflage (4), caractérisée en ce que les zones de recouvrement desdites extrémités (2, 3) de la chambre à air montée dans le pneu se recouvrent suivant un plan sensiblement radial, à savoir qu'elles sont juxtaposées l'une contre l'autre sensiblement dans le plan du pneu, qui contient la valve de gonflage (4).

2. Chambre à air selon la revendication 1, caractérisée en ce que la valve de gonflage (4) est disposée, dans ledit tube (1) à l'état développé et dégonflé, dans le plan dudit tube et perpendiculairement à l'axe longitudinal de ce tube (1), l'orifice (5), notamment circulaire, d'application de la valve (4) sur le tube (1) étant ménagé à cet effet par moitié dans la paroi supérieure dudit tube (1), lorsque celui-ci se trouve à l'état développé et dégonflé, et par moitié dans sa paroi inférieure, par une opération de perçage en demi-lune, sur un des bords (6) et dans une position quelconque du tube (1) constituant la chambre à air.

3. Chambre à air selon l'une quelconque des revendications 1 et 2, caractérisée en ce que ses extrémités fermées (2, 3) sont soudées et découpées en biais suivant un angle à pente positive ou négative, par rapport à l'axe longitudinal dudit tube (1) à l'état développé et dégonflé.

4. Chambre à air selon la revendication 1, caractérisé en ce que, dans le cas où la valve de gonflage (4) est disposée perpendiculairement à l'axe longitudinal de ce tube à air (1) à l'état développé et dégonflé, les extrémités fermées, dont les soudures sont préalablement effectuées dans un plan perpendiculaire à celui du tube (1) développé et dégonflé, présentent des plis obtenus par un mouvement de torsion de 90° desdites extrémités, visant à porter lesdites soudures dans le plan du tube dégonflé, suivi par une compression de ces extrémités.

5. Procédé de fabrication d'une chambre à air selon l'une quelconque des revendications 1 à 4, comportant les opérations suivantes : extrusion en continu d'un tube en matériau approprié ; talcage de la paroi intérieure de ce tube ; fermeture des extrémités d'un segment de tube de longueur correspondant à celle de la chambre voulue, notamment par soudure par compression ou collage ou autre ; perçage de l'orifice d'application de la valve de gonflage ; séparation dudit segment par découpage des zones soudées, et vulcanisation, notamment par immersion dans un bain de sels approprié, lequel procédé est caractérisé en ce que le perçage de l'orifice d'application de la valve de gonflage (4) se fait en perçant un orifice en demi-lune (5) sur un des bords (6) et en un point quelconque du tube à air (1) sortant en continu de l'extrudeuse.

6. Procédé selon la revendication 5 caractérisé en ce que, lorsque la valve de gonflage (4) est disposée perpendiculairement à l'axe longitudinal du tube à air (1) à l'état développé et dégonflé, le recouvrement suivant un plan sensiblement radial, au moment du montage dans un pneu, des extrémités dudit tube (1) est obtenu par soudage de ces extrémités effectué de façon que les soudures sont contenues dans un plan perpendiculaire au plan du tube à air à l'état développé et dégonflé.

7. Procédé selon la revendication 6, caractérisé en ce que l'opération de soudage de chaque extrémité du tube est suivie par une opération de pliage par torsion de 90° de ces extrémités, visant à porter lesdites soudures dans le plan du tube à l'état développé et dégonflé, et par une opération de compression des extrémités ainsi pliées, visant à créer des plis au niveau de chaque extrémité qui ne sont défaits qu'au moment du gonflage, notamment après montage dans un pneu, lorsque les soudures des extrémités sont juxtaposées et situées dans un plan sensiblement radial, à savoir sensiblement dans le plan du pneu, qui contient la valve de gonflage (4).

8. Procédé selon l'une quelconque des revendications 5 à 7, caractérisé en ce que le soudage et le découpage de chaque segment de tube (1), correspondant à une chambre air de longueur voulue, se fait en biais (7) suivant un angle à pente positive ou négative par rapport à l'axe longitudinal dudit tube.

## Claims

1. An inner tube adapted to be encased by a pneumatic tyre and to be mounted on wheeled vehicles, of the discontinuous type and consisting of a tube (1) of which the ends (2, 3) are closed and overlap mutually, and of a tube valve (4), characterised in that the overlapping regions of said ends (2, 3) of the inner tube mounted in the tyre overlap along a substantially radial plane, that is to say they are juxtaposed one against the other substantially in the plane of the tyre which contains the tube valve (4).

2. An inner tube according to Claim 1, characterised in that the tube valve (4) is disposed in said tube (1), when the latter is in the developed and deflated state, in the plane of said tube and perpendicularly to the longitudinal axis of said tube (1), the aperture (5), which is particularly circular, for fitting the valve (4) on the tube (1) being formed for this purpose half in the upper wall of said tube (1), when this is in the developed and deflated stage, and half in its lower wall, by a perforating operation in half-moon shape at one of the edges (6) and in any position of the tube (1) constituting the inner tube.

3. An inner tube according to either one of Claims 1 and 2, characterised in that its closed ends (2, 3) are welded and cut off obliquely at an angle with a positive or negative slope in relation to the longitudinal axis of said tube (1) in the developed and deflated state.

4. An inner tube according to Claim 1, characterised in that in the case where the tube valve (4) is disposed perpendicular to the longitudinal axis of this inner tube (1) in the developed and deflated state, the closed ends, the welding of which has previously been effected in a plane perpendicular to that of the developed and deflated tube (1), comprise folds obtained by a 90° twisting movement of said ends, aimed at bringing said welds into the plane of the deflated tube, followed by a compression of these ends.

5. A process for the manufacture of an inner tube according to any one of Claims 1 to 4, comprising the following operations : continuous extrusion of a tube of suitable material ; powdering the inner wall of this tube with talcum ; closing the ends of a portion of tube of a length corresponding to that of the desired inner tube, particularly by welding, by compression or adhesion or other means ; perforation of the aperture for fitting the tube valve ; separation of said portion by cutting the welding regions, and vulcanization, particularly by immersion in an appropriate bath of salts, which process is characterised in that the perforation of the aperture for fitting the tube valve (4) is effected by perforating a half-moon-shaped aperture (5) in one of the edges (6) and at any point of the inner tube (1) emerging continuously from the extruder.

6. A process according to Claim 5, characterised in that when the tube valve (4) is disposed perpendicular to the longitudinal axis of the inner tube (1) in the developed and deflated state, the overlapping along a substantially radial plane, at the moment of mounting in a tyre, of the ends of said tube (1) is obtained by welding these ends in such a manner that the welds are contained in a plane perpendicular to the plane of the inner tube in the developed and deflated state.

7. A process according to Claim 6, characterised in that the operation of welding each end of the tube is followed by a folding operation by twisting these ends through 90°, aiming at bringing said welds into the plane of the tube in the developed and deflated state, and by an operation of compressing the ends thus folded, aiming at creating folds at the level of each end, which are only removed at the moment of inflation, particularly after mounting in a tyre, when the welds of the ends are juxtaposed and situated in a substantially radial plane, namely substantially in the plane of the tyre which contains the tube valve (4).

8. A process according to any one of Claims 5 to 7, characterised in that the welding and cutting off of each portion of tube (1) corresponds to an inner tube of desired length, is effected obliquely at an angle with a positive or negative slope in relation to the longitudinal axis of said tube.

## Patentansprüche

1. Luftkammer, die dazu bestimmt ist, von einem Reifen eingehüllt und auf Straßenfahrzeugen montiert zu werden, und die vom diskontinuierlichen Typ und von einem Schlauch (1) gebildet ist, dessen Enden (2, 3) geschlossen sind und sich gegenseitig überdecken, und von einem Druckluftventil (4), dadurch gekennzeichnet, daß sich die Überdeckungszonen der genannten Enden (2, 3) der in dem Reifen montierten Luftkammer gemäß einer im wesentlichen radialen Ebene überdecken, d. h. daß sie eine gegen die andere im wesentlichen in der Ebene des Reifens, welche das Druckluftventil (4) enthält, nebeneinander sind.

2. Luftkammer nach Anspruch 1, dadurch gekennzeichnet, daß das Druckluftventil (4) in dem erwähnten Schlauch (1) im entwickelten und entleerten Zustand in der Ebene dieses Schlauchs und senkrecht zur Längsachse des Schlauchs (1) angeordnet ist, wobei die, insbesondere kreisförmige, Öffnung (5) für das Anbringen des Ventils (4) auf dem Schlauch (1) zu diesem Zweck zur Hälfte in der oberen Wand dieses Schlauchs (1), wenn sich dieser im entwickelten und entleerten Zustand befindet, und zur Hälft in seiner unteren Wand angebracht ist, und zwar durch einen Vorgang des halbmondförmigen Lochens auf einem der Ränder (6) und in irgendeiner Position des Schlauchs (1), welcher die Luftkammmer bildet.

3. Luftkammer nach irgendeinem der Ansprüche 1 und 2, dadurch gekennzeichnet, daß ihre geschlossenen Enden (2, 3) schräg gemäß einem Winkel mit positiver oder negativer Steigung mit Bezug auf die Längsachse des Schlauchs (1) im entwickelten und entleerten Zustand verschweißt und geschnitten sind.

4. Luftkammer nach Anspruch 1, dadurch gekennzeichnet, daß in dem Fall, in welchem das Druckluftventil (4) senkrecht zu der Längsachse dieses Luftschlauchs (1) im entwickelten und entleerten Zustand angeordnet ist, die geschlossenen Enden, deren Schweißstellen vorher in einer Ebene ausgeführt worden sind, die senkrecht zu derjenigen des entwickelten und entleerten Schlauchs (1) ist, Falten aufweisen, die erhalten worden sind durch eine Torsionsbewegung dieser Enden um 90°, wodurch bezweckt wird, diese Schweißstellen in der Ebene des entleerten Schlauchs zu halten, gefolgt von einem Zusammendrücken dieser Enden.

5. Verfahren zum Herstellen einer Luftkammer nach irgendeinem der Ansprüche 1 bis 4, umfassend die folgenden Vorgänge : kontinuierliche Extrusion eines Schlauchs aus geeignetem Material ; Talkumieren der Innenwand dieses Schlauchs ; Schließen der Enden eines Abschnitts des Schlauchs von einer Länge, die derjenigen der gewünschten Kammer entspricht, insbesondere durch Verschweißen durch Kompression oder Klebung oder anderes ; Lochen der Öffnung für das Anbringen des Druckluftventils ; Trennen des erwähnten Abschnitts durch Durchschneiden der verschweißten Zonen, und Vulkanisation, insbesondere durch Eintauchen in eine Bad geeigneter Salze, welches Verfahren dadurch gekennzeichnet ist, daß das Lochen der Öffnung für das Anbringen des Druckluftventils (4) dadurch ausgeführt wird, daß man eine Halbmondöffnung (5) auf einem der Ränder (6) und an irgendeiner Stelle des Luftschlauchs (1), der kontinuierlich aus der Extrusionseinrichtung austritt, locht.

6. Verfahren nach Anspruch 5, dadurch gekennzeichnet, daß dann, wenn das Druckluftventil (4) senkrecht zu der Längsachse des Luftschlauchs (1) im entwickelten und entleerten Zustand angeordnet ist, die Überdeckung gemäß einer im wesentlichen radialen Ebene der Enden des Schlauchs (1) im Moment der Montage in einem Reifen durch Verschweißen dieser Enden erhalten wird, die in der Weise bewirkt wird, daß die Schweißstellen in einer Ebene enthalten sind, welche senkrecht zur Ebene des Luftschlauchs im entwickelten und entleerten Zustand ist.

7. Verfahren nach Anspruch 6, dadurch gekennzeichnet, daß der Vorgang des Verschweißens von jedem Ende des Schlauchs gefolgt wird von einem Vorgang der Faltung durch Torsion dieser Enden um 90°, wodurch bezweckt wird, daß die erwähnten Schweißstellen in der Ebene des Schlauchs im entwickelten und entleerten Zustand gehalten werden, und durch einen Vorgang der Kompression dieser so gefalteten Enden, wodurch bezweckt wird, Falten auf dem Niveau jedes Endes zu erzeugen, die erst im Moment des Aufblasens aufgelöst werden, insbesondere nach der Montage in einem Reifen, wenn die Schweißstellen der Enden nebeneinandergelegt und in einer im wesentlichen radialen Ebene angeordnet sind, d. h. im wesentlichen in der Ebene des Reifens, welche das Druckluftventil (4) enthält.

8. Verfahren nach irgendeinem der Ansprüche 5 bis 7, dadurch gekennzeichnet, daß das Verschweißen und das Abschneiden jedes Abschnitts des Schlauchs (1), der einer Luftkammer gewünschter Länge entspricht, schräg (7) gemäß einem Winkel mit positiver oder negativer Steigung mit Bezug auf die Längsachse dieses Schlauchs erfolgt.

FIG. 1

FIG. 2a

FIG. 2b